# FASCICULE DE BREVET EUROPEEN

(11) **EP 3 146 394 B1**
(45) Date de publication et mention de la délivrance du brevet: **24.10.2018**
(21) Numéro de dépôt: 15714496.5
(22) Date de dépôt: 02.04.2015
(51) Int. Cl.: G04D 5/00, B26B 11/00

(54) **OUTILLAGE DE LUBRIFICATION PORTATIF POUR HORLOGER**
TRAGBARES SCHMIERWERKZEUG FÜR UHRMACHEREI
PORTABLE LUBRICATING TOOL FOR A CLOCKMAKER

(30) Priorité: 21.05.2014 EP 14169204
(43) Date de publication de la demande: 29.03.2017
(73) Titulaire: The Swatch Group Research and Development Ltd, 2074 Marin (CH)
(72) Inventeur: MARTIN, Jean-Claude, CH-2037 Montmollin (CH); WILLEMIN, Michel, CH-2515 Prêles (CH)
(74) Mandataire: Giraud, Eric
(86) Numéro de dépôt international: PCT/EP2015/057368
(87) Numéro de publication internationale: WO 2015/176864

(56) Documents cités:
- CH-A- 239 788
- CH-A- 240 514
- FR-A- 1 045 971
- FR-A- 1 124 292
- US-A- 5 283 920

## Description

### Domaine de l'invention

L'invention concerne un outillage de lubrification portatif pour horloger, qui comporte une pluralité de réservoirs de lubrifiant d'horlogerie, chacun accessible à un utilisateur seulement dans une première position d'ouverture dudit outillage, chaque dit réservoir étant obturable par au moins un couvercle étanche qui est, dans une deuxième position de fermeture, maintenu plaqué de façon étanche sur ledit réservoir.

L'invention concerne le domaine des outillages pour la mécanique fine, et notamment des outillages pour horloger, et plus particulièrement pour les tâches de lubrification de montres ou de pièces d'horlogerie.

### Arrière-plan de l'invention

La lubrification d'une pièce d'horlogerie est une opération essentielle, pour laquelle il existe peu d'outillage, hormis l'huileur automatique et l'huilier. Ces outillages sont bien adaptés à l'établi de manufacture, mais moins aux interventions sur site, ou même simplement au poste de travail de réparateurs horlogers disposant de très peu d'espace de travail.

Le document FR 1 045 971 A au nom de GUGIUGHIAN décrit un outillage de lubrification pour horloger comportant plusieurs godets fermés par des couvercles maintenus dans une position de fermeture par des moyens élastiques.

Le document CH 240 514 A au nom de JEANNERET divulgue un huilier à lubrifiant, avec un socle comportant au moins un godet à lubrifiant, lequel est noyé dans un logement du socle muni d'un obturateur mobile lequel constitue un support pour un pique-huile amovible, ce dernier pouvant servir à manoeuvrer l'obturateur tout en s'étendant, au repos, dans un évidement du socle à l'abri de la poussière. Cet huilier bien conçu est néanmoins de type traditionnel, et réservé à un usage d'établi, posé sur une surface plane.

Le document FR 1 124 292 au nom de CHARDON décrit une lubrification avec de la poudre de graphite, avec des logements à poudre disposés dans les mécanismes à lubrifier.

Le document CH 239 788 A au nom de PIAGET décrit un huilier avec un réservoir en ampoule teintée pour faire barrage à la lumière, ajusté dans un manche muni d'une poire, une extrémité de ce réservoir est un capillaire, introductible au repos dans un bloc-support de protection. Cet outillage est fragile et ne peut convenir à un usage portatif.

Le document US 5 283 920 au nom de PLUMMER décrit un couteau de pêche multi-fonctions comportant une cavité renfermant une éponge imbibée de lubrifiant pour l'affûtage d'un hameçon.

### Résumé de l'invention

Pour les interventions hors de l'atelier de l'horloger un besoin récurrent concerne les moyens de lubrification, pour lesquels il n'existe pas de bonne solution compacte permettant l'emport sécurisé d'huile propre, facilement identifiable sans risque de confusion.

Aussi l'invention propose la mise à disposition de l'horloger d'un outillage de lubrification portatif pour horloger.

A cet effet, l'invention concerne un outillage de lubrification portatif pour horloger, qui comporte une pluralité de réservoirs de lubrifiant d'horlogerie, chacun accessible à un utilisateur seulement dans une première position d'ouverture dudit outillage, chaque dit réservoir étant obturable par au moins un couvercle étanche qui est, dans une deuxième position de fermeture, maintenu plaqué de façon étanche sur ledit réservoir, caractérisé en ce que ledit outillage comporte une structure porteuse de au moins un dit réservoir et d'un dit couvercle associé audit réservoir, et en ce que ladite structure est un composant d'un couteau de poche multifonctions de type dit « couteau Suisse », lequel comporte un bâti sur lequel pivote une pluralité de lames, caractérisé en ce que ledit outillage comporte au moins un moyen de rappel élastique agencé pour exercer, dans ladite deuxième position de fermeture, un effort sur ledit au moins un couvercle pour le plaquer de façon étanche sur ledit au moins un réservoir.

### Description sommaire des dessins

D'autres caractéristiques et avantages de l'invention apparaîtront à la lecture de la description détaillée qui va suivre, en référence aux dessins annexés, où :

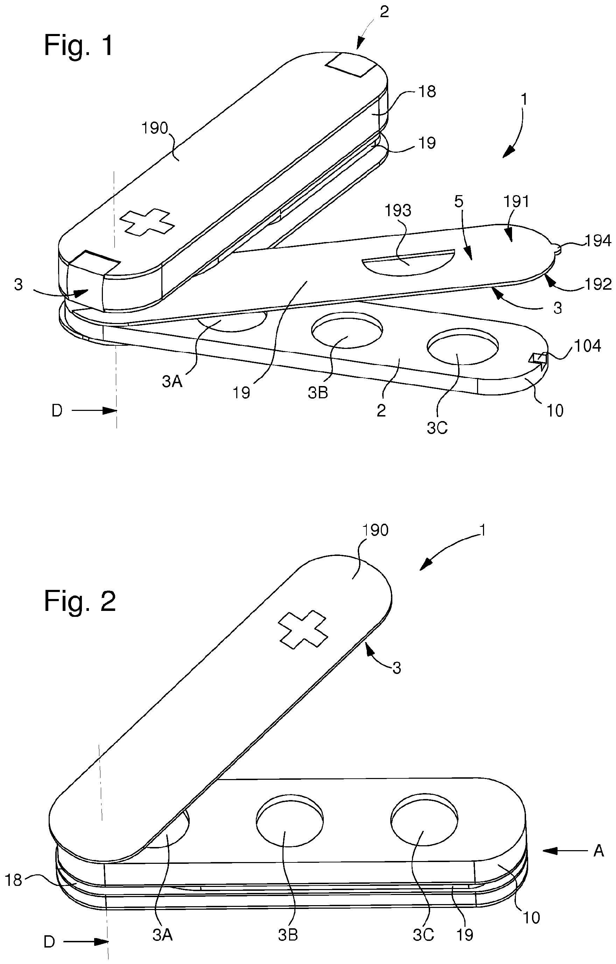

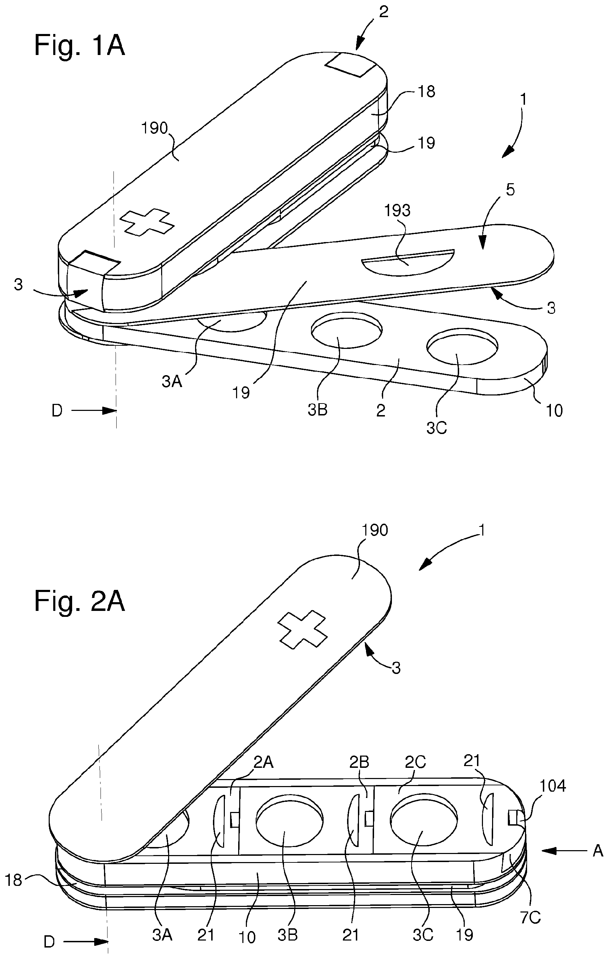

- la figure 1 représente, de façon schématisée et en perspective, un outillage selon l'invention, dans une variante particulière et non limitative de réalisation, avec une structure de couteau multi-usages, dite « couteau «Suisse », comportant, agencée comme une lame de couteau, une structure porteuse de réservoirs délimitant des chambres contenant chacune un lubrifiant, ces chambres étant chacune fermée par un couvercle ; un élément pivotant également analogue à une lame vient en superposition de cette structure porteuse, et immobilise les couvercles dans une position de fermeture quand l'élément pivotant est en superposition de la structure porteuse, par un ergot coopérant avec une rainure ;
- la figure 2 représente, de façon schématisée et en perspective, une réalisation similaire où le maintien des couvercles en position fermée est fait par une pièce d'habillage latérale de l'outillage, laquelle comporte un repère visuel et/ou tactile permettant d'identifier la face supérieure de l'outillage ;
- la figure 1A représente, de façon similaire à la figure 1, une variante sans ergot, le maintien en appui se fait alors uniquement en position refermée de l'élément pivotant et de la structure porteuse des réservoirs à l'intérieur du corps de l'outillage en position fermée ;
- la figure 2A représente, de façon similaire à la figure 2, une variante où la structure porteuse porte plusieurs réservoirs avec chacun un guidage en queue d'aronde ;
- la figure 3 représente, de façon schématisée et en perspective, une variante en « couteau «Suisse », comportant un réservoir de lubrifiant et un pique-huile représentés à la figure 4, le réservoir de lubrifiant étant logé dans le corps de l'outillage ; les figures 3A et 4A représente une variante avec le détail des moyens de clipage du couvercle du pique-huile dans le corps de l'outillage, et où le réservoir est clipé en extrémité inférieure de l'outillage, à l'opposé du pique-huile qui est en partie supérieure identifiée par le repère en croix Suisse;
- les figures 5A à 5C représentent une loupe déployable, en positions rétractée et déployée d'une première version en figures 5A et 5B, en position déployée d'une deuxième version en figure 5C ;
- les figures 6 à 12 et 14 représentent, en coupe transversale, différentes variantes d'agencement de l'outillage selon l'invention ;
- la figure 13 représente, en coupe longitudinale, l'outillage de la figure 1A ;
- la figure 15 représente, de façon schématisée et en perspective, une variante en « couteau «Suisse », porteuse d'une loupe selon les figures 5A et 5B, clipée et extractible pour être mise à l'oeil de l'utilisateur.

### Description détaillée des modes de réalisation préférés

L'invention se propose d'offrir à l'horloger un outillage portatif 1, porteur d'éléments nécessaires à l'entretien ou au service après-vente d'une montre ou d'une pendule, ou encore d'une horloge d'édifice. Cet outillage est utilisable par tout micro-mécanicien en mécanique fine.

Pour les interventions hors de l'atelier de l'horloger un besoin récurrent concerne les moyens de lubrification, pour lesquels il n'existe pas de bonne solution compacte permettant l'emport sécurisé d'huile propre, facilement identifiable sans risque de confusion.

Aussi l'invention propose la mise à disposition de l'horloger d'un outillage de lubrification portatif pour horloger 1.

Selon l'invention, cet outillage 1 comporte une pluralité de chambres 20 que comporte au moins un réservoir de lubrifiant 2 d'horlogerie, chacune accessible à un utilisateur seulement dans une première position d'ouverture de l'outillage 1, chaque dit réservoir 2 étant obturable par au moins un couvercle 3 étanche qui est, dans une deuxième position de fermeture, maintenu plaqué de façon étanche sur le réservoir 2 considéré.

Chaque réservoir 2 de lubrifiant délimite au moins une chambre 20 dans laquelle est contenu le lubrifiant.

On comprend qu'un même support matériel puisse comporter un ou plusieurs réservoirs 2.

Dans le cas de la figure 1, une première série de couvercles 3A, 3B, 3C, fermant directement les chambres 20 respectives et au contact du lubrifiant que contiennent ces chambres 20, est maintenue en appui sur les chambres 20 grâce à un élément pivotant 5, qui forme lui-même un second niveau de couvercle 3. Il est naturellement possible d'obturer directement des chambres 20 par un tel couvercle 3 formé d'un élément pivotant 5 ou d'un élément coulissant 50.

On comprend que, pour éviter toute pollution ou tout mélange de lubrifiant, chaque réservoir 2 est avantageusement obturé par une surface d'un couvercle 3 qui lui est propre, ou, mieux encore, par un couvercle 3 qui lui est propre.

Pour assurer une étanchéité satisfaisante, ou bien le réservoir 2, ou bien le couvercle 3 correspondant, est de préférence en matériau souple. De façon avantageuse, au moins un tel couvercle 3 est en matériau élastique ou en élastomère ou en caoutchouc ou en liège.

L'outillage 1 selon la revendication comporte de préférence au moins un moyen de rappel élastique 4, qui est agencé pour exercer, dans la deuxième position de fermeture, un effort sur le au moins un couvercle 3 pour le plaquer de façon étanche sur le au moins un réservoir 2. Dans certaines des réalisations illustrées, ces moyens de rappel élastique 4 sont constitués par une lame 19, une lame pivotante 5, ou encore un élément coulissant 50, que comporte l'outillage 1, pour plaquer le couvercle 3 sur le réservoir 2 quand ils sont dans une position de fermeture de l'outillage 1.

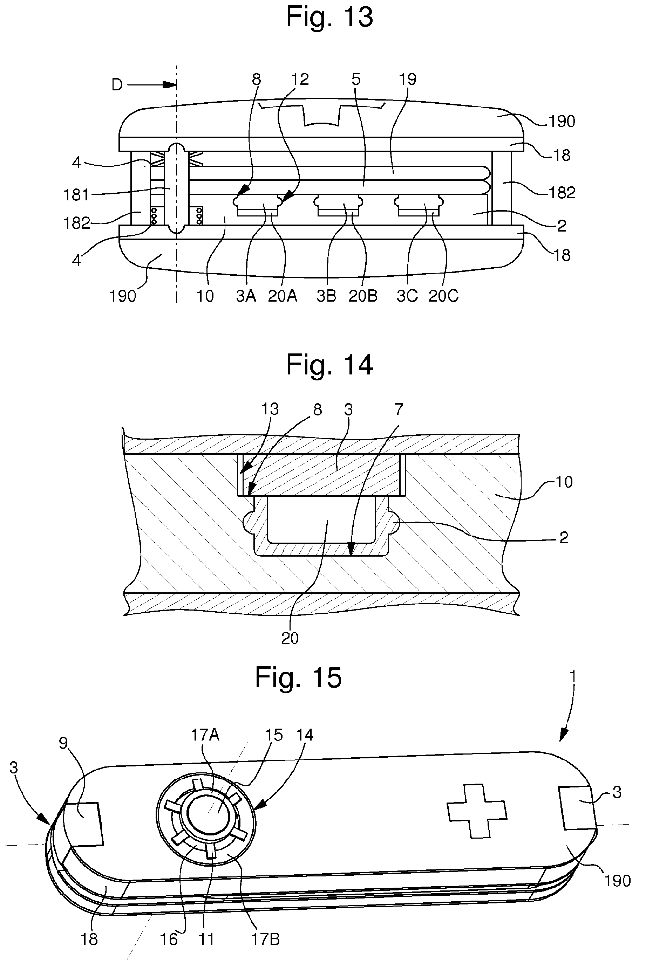

Un moyen de rappel élastique 4 peut, encore, comporter un ou plusieurs ressorts, tel que visible sur la figure 13 où deux ressorts tendent à plaquer une lame pivotante 5, montée pivotante sur un arbre 181 d'axe de pivotement D. La figure 1 montre la coopération de la lame pivotante 5, qui comporte un ergot 194 lequel coopère avec une rainure 104 d'une structure 10 porteuse des chambres 20 pour les maintenir alignées en superposition l'une sur l'autre. L'outillage 1 comporte de préférence, sur une seule pièce d'habillage 190 qu'il comporte à sa périphérie, un repère visuel et/ou tactile (ici représenté par une croix Suisse), qui repère son extrémité supérieure. La lame pivotante 5 et la structure 10, ici également pivotante autour du même axe D, sont lisses sur leur pourtour latéral et sur leur face inférieure, seule une face supérieure 191 de la lame pivotante 5 comporte des moyens de manoeuvre 193, qui obligent l'utilisateur à manoeuvrer l'outillage 1 dans un sens d'ouverture tel que la structure 10 se présente sensiblement à plat, avec les couvercles 3 vers le haut. L'utilisateur peut, alors, ouvrir le couvercle 3 correspondant au lubrifiant désiré, et prélever ce dernier, sans renverser de lubrifiant. Dans l'application particulière illustrée par la figure1, le maintien en position ouverte à un angle de 90° ou similaire permet un appui commode et stable sur une surface horizontale pendant l'exécution du travail.

De façon avantageuse, chaque couvercle 3 est maintenu attaché à proximité de la chambre 20 qu'il obture, par exemple par une liaison souple en matière plastique ou similaire.

Dans une telle variante, un tel élément pivotant 5 est avantageusement agencé pour, dans la deuxième position de fermeture, constituer une surface de butée 6 d'un tel couvercle 3 pour limiter sa course ou pour le comprimer sur le réservoir 2 correspondant, de façon à obturer la chambre 20 correspondante de façon étanche.

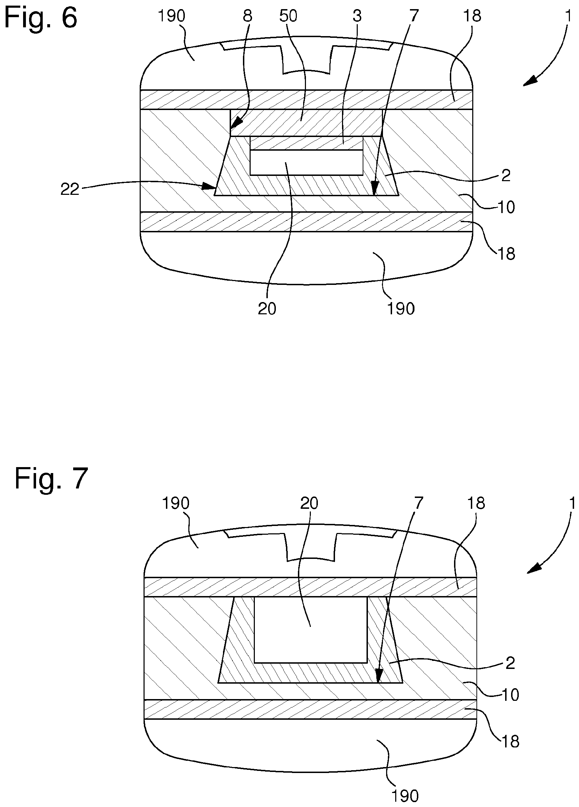

Dans une variante, au lieu d'un élément pivotant, on utilise un élément coulissant 50, tel que visible en figure 6.

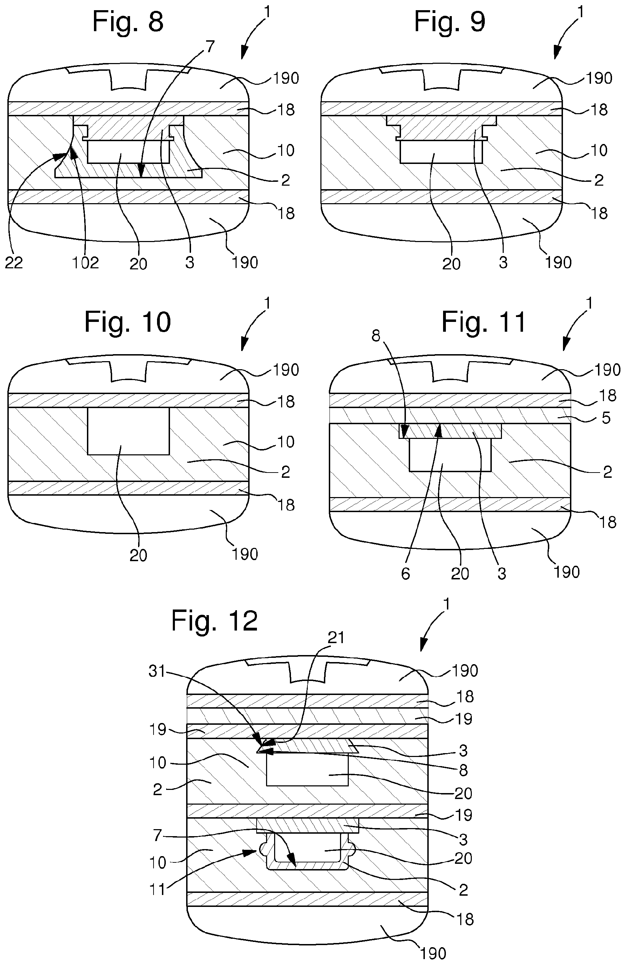

Dans une variante, au moins un tel couvercle 3 coopère avec un tel réservoir 2 par des moyens de guidage en translation ou par un guidage en queue d'aronde., tel que visible sur la figure 12.

Dans une variante avantageuse, l'outillage 1 comporte un premier logement 7 pour la réception de chaque réservoir 2, ce qui en facilite le nettoyage et le remplissage. Un exemple est visible en figure 2A.

Bien sûr, un logement 7 peut aussi constituer directement un réservoir 2, mais la variante d'un réservoir 2 amovible est avantageuse pour le nettoyage et e maintien en propreté de l'outillage 1.

De préférence, au moins un dit réservoir 2 est amovible pour son nettoyage ou son remplissage. Outre l'exemple précédent, la figure 12 montre un réservoir 2 souple et simplement clipé dans une structure 10 : l'outillage 1 comporte alors des premiers moyens de clipage 11 d'un tel réservoir 2, qui sont ménagés au niveau de ce réservoir 2 et/ou au niveau d'une structure 10 que comporte l'outillage 1 et qui est porteuse d'au moins un tel premier logement 7, pour le maintien du réservoir 2 dans son premier logement 7.

De préférence, l'outillage 1 comporte au moins une structure 10 porteuse d'au moins un tel premier logement 7, et au moins un tel réservoir 2 coopère avec la structure 10 par des moyens de guidage en translation ou par un guidage en queue d'aronde.

Avantageusement, l'outillage 1 au moins un deuxième logement 8 pour la réception d'au moins un tel couvercle 3.

L'outillage 1 comporte alors avantageusement des deuxièmes moyens de clipage 12 d'au moins un tel couvercle 3, qui sont ménagés au niveau de ce couvercle 3 et/ou au niveau d'une structure 10 que comporte l'outillage 1 et qui est porteuse d'un tel deuxième logement 8, pour le maintien en position étanche du couvercle 3 dans son deuxième logement 8, dans une position de fermeture du couvercle 3.

Dans la variante de la figure 14, l'outillage 1 comporte des moyens de vissage 13 d'un tel couvercle 3, qui sont ménagés au niveau de ce couvercle 3 et au niveau d'une structure 10 que comporte l'outillage 1 et qui est porteuse d'un deuxième logement 8, pour le maintien du couvercle 3 dans son deuxième logement 8, dans une position de fermeture du couvercle 3.

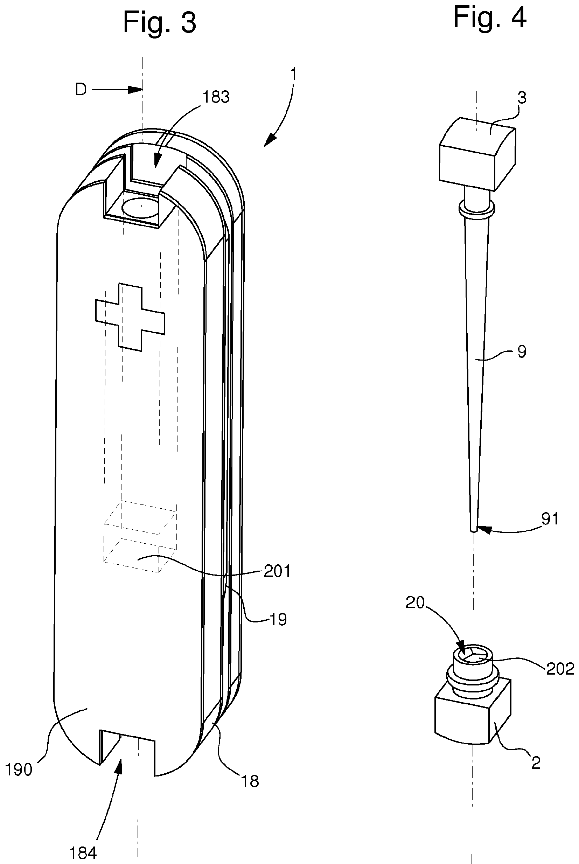

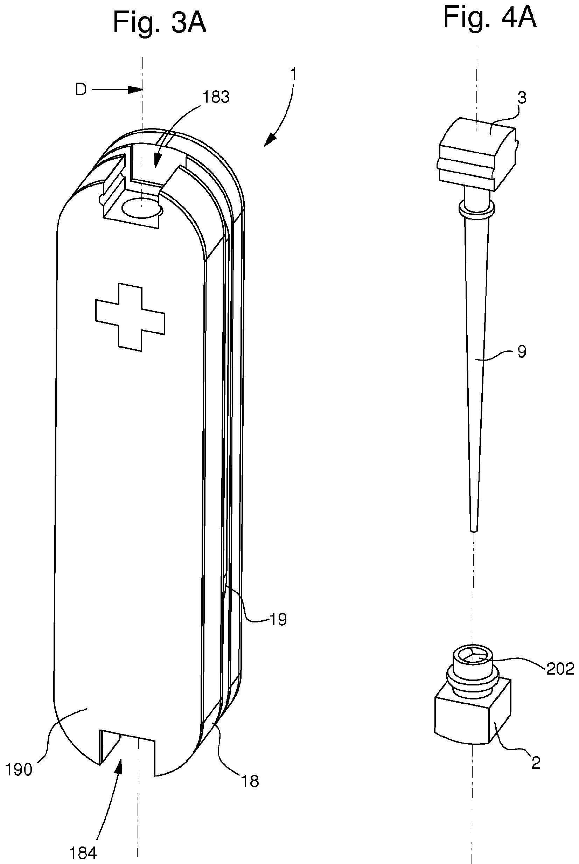

Les figures 3, 3A, 4, 4A, illustrent une variante d'agencement où l'outillage 1 comporte au moins un pique-huile 9 monobloc avec au moins un tel couvercle 3. Les figures 3 et 4 montrent un réservoir 2 amovible agencé pour équiper un logement 201 ménagé dans l'épaisseur d'un bâti 18. Ce réservoir 2 comporte une membrane 202 fendue en élastomère ou similaire, autorisant le passage étanche de l'extrémité 91 d'un pique-huile 9. Ce pique-huile 9 est ici logé, et notamment clipé par une extrémité opposée à celle destinée au transfert du lubrifiant, dans un logement 183 que comporte un bâti 18 de l'outillage 1.

La figure 4A montre un réservoir 2 amovible, similaire à celui de la figure 4, mais agencé pour être clipé dans une ouverture 184 de le bâti 18. Les figures 3A et 4A montrent le détail d'une coopération par clipage entre le couvercle 3 du pique-huile et le logement 183 du bâti 18.

Dans cette exécution, avantageusement le réservoir 2 est fermé par le pique-huile 9 correspondant, par clipage, vissage, chassage, ou similaire. Ceci apporte l'avantage de disposer d'un pique-huile par lubrifiant, donc sans risque de pollution ou de besoin de nettoyage entre deux applications de deux lubrifiants différents. Il est, de plus, facile de personnaliser l'embout du pique-huile 9, faisant couvercle 3, selon l'application et la viscosité du lubrifiant considéré.

Naturellement, le pique-huile 9 peut aussi être indépendant de tout réservoir, pour être employé avec une au moins des chambres 20 que comporte l'outillage 1, auquel cas le pique-huile 9 est simplement clipé dans un logement ; de préférence ce logement est-lui-même extractible de façon à pouvoir être nettoyé.

De façon particulièrement avantageuse, l'outillage 1 est agencé de façon à ce que chaque réservoir 2 comporte une coloration ou un codage optique et/ou tactile en relation avec un lubrifiant qu'il est agencé pour contenir. Et chaque couvercle 3 agencé pour coopérer avec une chambre 20 particulière d'un réservoir 2 particulier comporte la même coloration ou le même codage optique et/ou tactile que cette chambre 20 ou que ce réservoir 2 particulier.

La coloration des réservoirs permet aussi d'améliorer le contraste pour l'estimation de la quantité de lubrifiant restante. Naturellement il est possible de réaliser des variantes avec des réservoirs combinés, afin de disposer d'une plus grande capacité de lubrifiants.

L'utilisation de réservoirs amovibles permet un remplacement aisé, aussi bien à l'unité qu'en conteneur complet.

Quand l'outillage 1 comporte au moins un pique-huile 9 pour chaque catégorie de lubrifiant, chaque pique-huile 9 comporte la même coloration ou le même codage optique et/ou tactile que la chambre 20 ou le réservoir 2 particulier associé au même lubrifiant.

Avantageusement, chaque pique-huile 9 comporte une forme et une surface spécifiques pour chaque dite catégorie de lubrifiant.

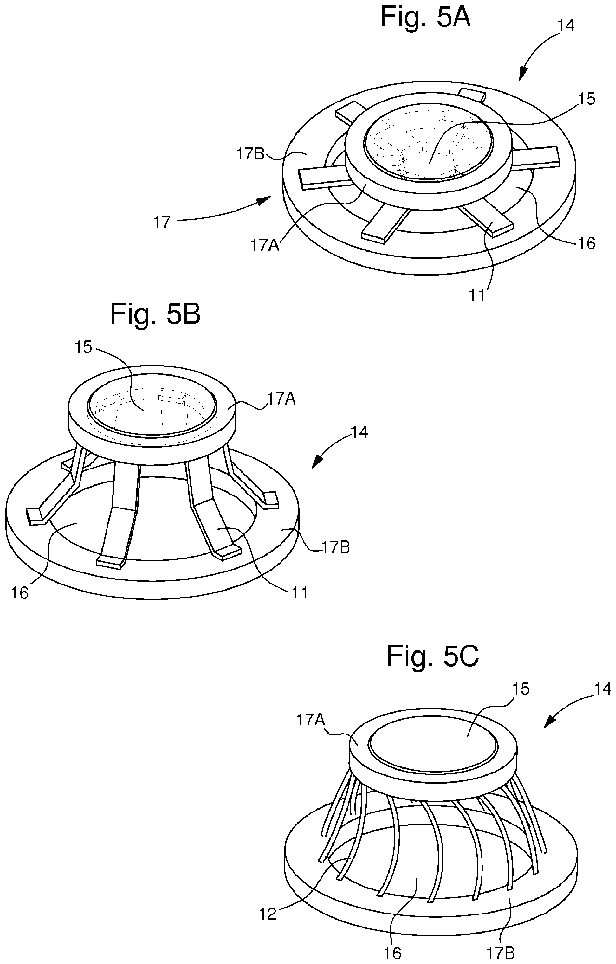

Pour faciliter la dépose de lubrifiant, l'outillage 1 comporte avantageusement au moins une loupe 14 repliable, de préférence amovible, et comportant au moins deux lentilles 15, 16 mobiles par déploiement ou repliage par translation et/ou rotation d'un corps 17 que comporte la loupe 14 qui est porteur des lentilles 15, 16, tel que visible sur les figures 5A, 5B, 5C. Un corps intérieur 17A porteur d'une première lentille 15, et un corps extérieur 17B porteur d'une deuxième lentille 16, sont reliés l'un à l'autre, soit par des lames ressort bistables 11, soit par des fils-ressort 12, ce qui autorise le déploiement de la loupe 14, soit par translation d'un corps 17A ou 17B dans le cas des figures 5A et 5B, soit par rotation d'un corps17A ou 17B dans le cas de la figure 5C. On comprend que la loupe est très utile, voire absolument nécessaire, dans le contexte de la lubrification de pièces en mécanique fine ou en horlogerie, où les zones à lubrifier sont petites, et la visibilité souvent faible.

Dans une réalisation pratique et particulièrement compacte, illustrée par les figures, l'outillage 1 comporte une structure 10 porteuse d'au moins un tel réservoir 2 et d'un tel couvercle 3 associé à ce réservoir 2. Cette structure 10 est un composant d'un couteau de poche multifonctions de type dit « couteau Suisse », qui comporte un bâti 18 sur lequel pivote une pluralité de lames 19. La figure 13 illustre une réalisation avec un bâti 18 à joues parallèles reliées par des tirants 182, et qui porte un arbre de pivotement 181 autour duquel pivotent une ou plusieurs lames 19 et/ou un ou plusieurs éléments pivotants 5. Ce bâti 18 porte une ou plusieurs pièces d'habillage 190, lesquelles peuvent elles-mêmes porter certains composants, notamment la loupe 14 représentée en figure 11. Dans cet exemple particulier, la loupe 14 est clipée sur une pièce d'habillage 190, et extractible pour être mise à l'oeil de l'utilisateur. Naturellement la loupe 14 peut encore être clipée dans une lame 19 intermédiaire, pour sa protection. La loupe 14 peut encore être monobloc avec une telle lame 19, le bâti 18 de l'outillage 1 permettant alors une préhension par l'opérateur à la façon d'une poignée.

Notamment un élément pivotant 5 peut être constitué par une lame 19, laquelle peut avoir une fonction d'outil d'ouverture de fond ou de boîte de montre, de tournevis, ou encore de brucelles, ou similaire.

Avantageusement, au moins une telle lame 19 comporte une partie des moyens de guidage en translation ou dudit guidage en queue d'aronde d'au moins un réservoir 2.

Dans une variante, au moins un couvercle 3 est constitué par une lame 19.

Dans une variante particulière, l'outillage 1 comporte plusieurs pique-huile 9, et/ou au moins une lame 19 dont l'extrémité déployée fait office de loupe 14.

Les figures illustrent quelques variantes de réalisation de l'invention, de réalisation facile, et qui ne sont nullement limitatives, et qui peuvent être combinées entre elles.

Les figures 1 et 2 montrent une structure 10 plate, représentée en coupe longitudinale en figure 13, qui constitue un réservoir 2 avec trois chambres distinctes : 20A, 20B, 20C, chacune obturée par un couvercle clipé, respectivement 3A, 3B, 3C, maintenu par une lame pivotante 5 sur les figures 1 et 13, ou par une pièce d'habillage 190 sur la figure 2.

La figure 2A montre trois réservoirs 2A, 2B, 2C, chacun avec un profil en tenon en queue d'aronde, enfilés côte à côte dans une mortaise en queue d'aronde que comporte une structure plate 10 similaire à la précédente. Chacun d'eux comporte un moyen de préhension 21 pour faciliter son extraction de la glissière.

La figure 6 montre, en coupe, un outillage comportant une structure 10 comportant une mortaise en queue d'aronde recevant un tenon en queue d'aronde d'un réservoir 2. Ce réservoir 2 est bouché par un couvercle 3, lequel est maintenu par un élément coulissant 50 limité dans son débattement par le bâti 18.

La figure 7 illustre le cas où un tel réservoir 2 est obturé, non pas par un petit couvercle indépendant comme dans les variantes précédentes, mais par un composant de plus grande ampleur, ici une lame 9, qui peut obturer plusieurs réservoirs 2 à la fois.

La figure 8 montre un réservoir avec un profil 22 coulissant dans un profil complémentaire 102 d'une structure 10. Un couvercle 3 est clipé dans le réservoir 2 et prend appui à la fois sur ce réservoir 2 et sur la structure 10 qui porte ce réservoir 2. Ce couvercle 3 vient en appui sur une structure fixe 18.

La figure 9 illustre un structure 10 constituant un réservoir 2, lequel est obturé par un couvercle 3 clipé et qui est vient en appui sur une structure fixe 18.

La figure 10 illustre une version encore plus simple où la structure 10 qui constitue le réservoir 2 vient en appui sur une structure fixe 18. De préférence, au moins la structure 10 ou la structure fixe 18 est en matériau élastique; avantageusement la structure 10 est en élastomère ou similaire et assure l'étanchéité du logement 20 sur le bâti 18.

La figure 11 illustre une structure 10 avec un couvercle 3 maintenu dans un lamage et retenu en appui par une lame pivotante 5, tel que visible sur la figure 1.

La figure 12 illustre, d'une part en partie inférieure, un réservoir 2 clipé dans une structure 10, obturé par un couvercle 3 maintenu par une lame 9, et d'autre part, en partie supérieure, une autre structure 10 faisant réservoir 2 et comportant une mortaise en queue d'aronde 21 recevant un couvercle 3 à tenon en queue d'aronde 31, lui-même en appui sur une lame 19.

Dans une autre variante encore, non illustrée sur les figures, l'outillage 1 comporte une cassette extractible, montée pivotante ou coulissante et maintenue arrêtée en position de fermeture dans le corps de l'outillage 1 par un ergot élastique ou similaire. Cette cassette comporte un ou plusieurs réservoirs 2, et un couvercle qui est automatiquement plaqué sur le corps de cassette lors de la fermeture, garantissant l'étanchéité et empêchant le ou les lubrifiants de couler ou de s'assécher. Dans une variante particulière, ce couvercle est articulé, de façon imperdable, au corps de la cassette.

Pour les interventions sur pendules et horloges d'édifices, l'outillage 1 comporte encore, avantageusement, un éclairage sous forme d'une torche à faisceau étroit, logée dans un logement 7 de l'outillage 1. Dans une variante avantageuse, cette torche comporte un logement pour la réception d'un pique-huile 9, orienté de façon à ce que l'extrémité distale du pique-huile 9 utilisée pour le dépôt de lubrifiant soit dans l'axe du faisceau lumineux de la torche. Cet éclairage vient avantageusement en complément d'une loupe, pour améliorer la visibilité et la précision de l'opération de lubrification, ou de toute opération délicate exécutée avec l'outillage 1 : vissage, sertissage, ou autre.

## Revendications

1. Outillage de lubrification portatif pour horloger (1), comportant une pluralité de chambres (20) que comporte au moins un réservoir de lubrifiant (2) d'horlogerie, chacune accessible à un utilisateur seulement dans une première position d'ouverture dudit outillage (1), chaque dit réservoir (2) étant obturable par au moins un couvercle (3) étanche qui est, dans une deuxième position de fermeture, maintenu plaqué de façon étanche sur ledit réservoir (2), ledit outillage comportant une structure (10) porteuse de au moins un dit réservoir (2) et d'un dit couvercle (3) associé audit réservoir (2), et ladite structure (10) étant un composant d'un couteau de poche multifonctions de type dit « couteau Suisse », lequel comporte un bâti (18) sur lequel pivote une pluralité de lames (19), ledit outillage (1) comportant au moins un moyen de rappel élastique (4) agencé pour exercer, dans ladite deuxième position de fermeture, un effort sur ledit au moins un couvercle (3) pour le plaquer de façon étanche sur ledit au moins un réservoir (2).

2. Outillage (1) selon la revendication 1, **caractérisé en ce qu'**au moins un dit couvercle (3) est en matériau élastique ou en élastomère ou en caoutchouc ou en liège.

3. Outillage (1) selon la revendication 1, **caractérisé en ce qu'**il comporte au moins un élément pivotant (5) ou un élément coulissant (50) qui est agencé pour, dans ladite deuxième position de fermeture, constituer une surface de butée (6) dudit au moins un couvercle (3) pour limiter sa course ou pour le comprimer sur ledit au moins un réservoir (2).

4. Outillage (1) selon la revendication 3, **caractérisé en ce que** au moins un dit élément pivotant (5) est constitué par une dite lame (19).

5. Outillage (1) selon la revendication 1, **caractérisé en ce que** au moins un dit couvercle (3) est constitué par une dite lame (19).

6. Outillage (1) selon la revendication 1, **caractérisé en ce qu'**au moins un dit couvercle (3) coopère avec un dit réservoir (2) par des moyens de guidage en translation ou par un guidage en queue d'aronde.

7. Outillage (1) selon la revendication 1, **caractérisé en ce qu'**il comporte un premier logement (7) distinct pour chaque dit réservoir (2).

8. Outillage (1) selon la revendication 1, **caractérisé en ce que** au moins un dit réservoir (2) est amovible pour son nettoyage ou son remplissage.

9. Outillage (1) selon la revendication 8, **caractérisé en ce qu'**il comporte des premiers moyens de clipage (11) dudit au moins un réservoir (2) qui sont ménagés au niveau dudit au moins un réservoir (2) et/ou au niveau de ladite structure (10) qui est porteuse dudit au moins un dit premier logement (7), pour le maintien dudit réservoir (2) dans son dit premier logement (7).

10. Outillage (1) selon la revendication 7, **caractérisé en ce que** ladite structure (10) est porteuse dudit au moins un dit premier logement (7), et **en ce que** au moins un dit réservoir (2) coopère avec ladite structure (10) par des moyens de guidage en translation ou par un guidage en queue d'aronde.

11. Outillage (1) selon la revendication 10, **caractérisé en ce que** au moins une dite lame (19) comporte une partie desdits moyens de guidage en translation ou dudit guidage en queue d'aronde dudit au moins un dit réservoir (2).

12. Outillage (1) selon la revendication 1, **caractérisé en ce qu'**il comporte au moins un deuxième logement (8) pour au moins un dit couvercle (3).

13. Outillage (1) selon la revendication 12, **caractérisé en ce qu'**il comporte des deuxièmes moyens de clipage (12) dudit au moins un couvercle (3) qui sont ménagés au niveau dudit au moins un couvercle (3) et/ou au niveau de ladite structure (10) qui est porteuse dudit au moins un dit deuxième logement (8), pour le maintien en position étanche dudit couvercle (3) dans son dit deuxième logement (8), dans une position de fermeture dudit couvercle (3).

14. Outillage (1) selon la revendication 12, **caractérisé en ce qu'**il comporte des moyens de vissage (13) dudit au moins un couvercle (3) qui sont ménagés au niveau dudit au moins un couvercle (3) et au niveau d'une structure (10) que comporte ledit outillage (1) et qui est porteuse dudit au moins un dit deuxième logement (8), pour le maintien dudit couvercle (3) dans son dit deuxième logement (8), dans une position de fermeture dudit couvercle (3).

15. Outillage (1) selon la revendication 1, **caractérisé en ce que** chaque dit réservoir (2) comporte une coloration ou un codage optique en relation avec un lubrifiant qu'il est agencé pour contenir, et **en ce que** chaque dit couvercle (3) agencé pour coopérer avec un dit réservoir (2) particulier comporte la même coloration ou le même codage optique que ledit réservoir (2) particulier.

16. Outillage (1) selon la revendication 15, **caractérisé en ce que** chaque dit réservoir (2) comporte une coloration ou un codage optique en relation avec un lubrifiant qu'il est agencé pour contenir, et **en ce que** ledit outillage (1) comporte au moins un pique-huile (9) pour chaque catégorie de lubrifiant, chaque dit pique-huile (9) comportant la même coloration ou le même codage optique que ledit réservoir (2) particulier associé au même lubrifiant.

17. Outillage (1) selon la revendication 16, **caractérisé en ce que** chaque dit pique-huile (9) comporte une forme et une surface spécifiques pour chaque dite catégorie de lubrifiant.

18. Outillage (1) selon la revendication 1, **caractérisé en ce qu'**il comporte au moins un pique-huile (9) monobloc avec au moins un dit couvercle (3).

19. Outillage (1) selon la revendication 1, **caractérisé en ce qu'**il comporte au moins un pique-huile (9) agencé pour être clipé, par une extrémité opposée à celle destinée au transfert du lubrifiant, dans un logement (183) que comporte un bâti (18) dudit outillage (1).

20. Outillage (1) selon la revendication 1, **caractérisé en ce qu'**il comporte au moins une loupe (14) repliable comportant au moins deux lentilles (15, 16) mobiles par déploiement ou repliage par translation et/ou rotation d'un corps (17) que comporte ladite loupe (14) qui est porteur desdites lentilles (15, 16).

21. Outillage (1) selon la revendication 20, **caractérisé en ce qu'**il comporte au moins une dite lame (19) dont l'extrémité déployée fait office de loupe selon la revendication 21.

## Patentansprüche

1. Tragbares Schmierungswerkzeug für Uhrmacher (1), umfassend mehrere Kammern (20), die mindestens ein Schmiermittelreservoir (2) für den Uhrenbau enthaltet, wovon jede für einen Benutzer nur in einer ersten Öffnungsposition des Werkzeugs (1) zugänglich ist, wobei jedes Reservoir (2) durch mindestens einen dichten Deckel (3) verschließbar ist, der in einer zweiten Schließposition dicht auf das Reservoir (2) gedrückt gehalten wird, wobei das Werkzeug eine Tragstruktur (10) für mindestens ein Reservoir (2) und einen dem Reservoir (2) zugeordneten Deckel (3) umfasst, und wobei die Struktur (10) eine Komponente eines multifunktionalen Taschenmessers des Typs "Schweizer Messer" ist, das einen Halter (18) aufweist, an dem mehrere Klingen (19) drehbar sind, wobei das Werkzeug (1) mindestens ein elastisches Rückstellmittel (4) aufweist, das dafür ausgelegt ist, in der zweiten Schließposition auf den mindestens einen Deckel (3) eine Kraft auszuüben, um ihn dicht auf das mindestens ein Reservoir (2) zu drücken.

2. Werkzeug (1) nach Anspruch 1, **dadurch gekennzeichnet, dass** mindestens ein Deckel (3) aus elastischem Material oder aus einem Elastomer oder aus Kautschuk oder aus Kork besteht.

3. Werkzeug (1) nach Anspruch 1, **dadurch gekennzeichnet, dass** es mindestens ein Drehelement (5) oder ein Gleitelement (50) umfasst, das dafür ausgelegt ist, in der zweiten Schließposition eine Anschlagoberfläche (6) für den mindestens einen Deckel (3) zu bilden, um dessen Bahn zu begrenzen oder um ihn auf dem mindestens einen Reservoir (2) zusammenzudrücken.

4. Werkzeug (1) nach Anspruch 3, **dadurch gekennzeichnet, dass** mindestens ein Drehelement (5) durch eine Klinge (19) gebildet ist.

5. Werkzeug (1) nach Anspruch 1, **dadurch gekennzeichnet, dass** mindestens ein Deckel (3) durch eine Klinge (19) gebildet ist.

6. Werkzeug (1) nach Anspruch 1, **dadurch gekennzeichnet, dass** mindestens ein Deckel (3) mit einem Reservoir (2) durch Mittel für translatorische Führung oder durch eine Schwalbenschwanzführung zusammenwirkt.

7. Werkzeug (1) nach Anspruch 1, **dadurch gekennzeichnet, dass** es einen ersten Aufnahmeraum (7) umfasst, der für jedes Reservoir (2) verschieden ist.

8. Werkzeug (1) nach Anspruch 1, **dadurch gekennzeichnet, dass** mindestens ein Reservoir (2) abnehmbar ist, um es zu reinigen oder zu befüllen.

9. Werkzeug (1) nach Anspruch 8, **dadurch gekennzeichnet, dass** es erste Einrastmittel (11) für das mindestens eine Reservoir (2) umfasst, die auf Höhe des mindestens einen Reservoirs (2) und/oder auf Höhe der Struktur (10) ausgebildet sind, die den mindestens einen ersten Aufnahmeraum (7) trägt, um das Reservoir (2) in seinem ersten Aufnahmeraum (7) zu halten.

10. Werkzeug (1) nach Anspruch 7, **dadurch gekennzeichnet, dass** die Struktur (10) den mindestens einen ersten Aufnahmeraum (7) trägt und dass das mindestens eine Reservoir (2) mit der Struktur (10) durch translatorische Führungsmittel oder durch eine Schwalbenschwanzführung zusammenwirkt.

11. Werkzeug (1) nach Anspruch 10, **dadurch gekennzeichnet, dass** mindestens eine Klinge (19) einen Teil der translatorischen Führungsmittel oder der Schwalbenschwanzführung des mindestens einen Reservoirs (2) umfasst.

12. Werkzeug (1) nach Anspruch 1, **dadurch gekennzeichnet, dass** es mindestens einen zweiten Aufnahmeraum (8) für mindestens einen Deckel (3) umfasst.

13. Werkzeug (1) nach Anspruch 12, **dadurch gekennzeichnet, dass** es zweite Einrastmittel (12) für den mindestens einen Deckel (3) umfasst, die auf Höhe des mindestens einen Deckels (3) und/oder auf Höhe der Struktur (10), die den mindestens einen zweiten Aufnahmeraum (8) trägt, ausgebildet sind, um in einer Schließposition des Deckels (3) den Deckel (3) in seinem zweiten Aufnahmeraum (8) in einer dichten Position zu halten.

14. Werkzeug (1) nach Anspruch 12, **dadurch gekennzeichnet, dass** es Verschraubungsmittel (13) für den mindestens einen Deckel (3) umfasst, die angeordnet sind auf Höhe des mindestens einen Deckels (3) und auf Höhe einer Struktur (10), die das Werkzeug (1) aufweist und die den mindestens einen zweiten Aufnahmeraum (8) trägt, um in einer Schließposition des Deckels (3) den Deckel (3) in seinem zweiten Aufnahmeraum (8) zu halten.

15. Werkzeug (1) nach Anspruch 1, **dadurch gekennzeichnet, dass** jedes Reservoir (2) eine Farbgebung oder eine optische Codierung in Bezug auf ein Schmiermittel aufweist, für dessen Aufnahme es angeordnet ist, und dass jeder Deckel (3), der dafür ausgelegt ist, mit einem bestimmten Reservoir (2) zusammenzuwirken, die gleiche Farbgebung oder die gleiche optische Codierung wie das bestimmte Reservoir (2) aufweist.

16. Werkzeug (1) nach Anspruch 15, **dadurch gekennzeichnet, dass** jedes Reservoir (2) eine Farbgebung oder eine optische Codierung in Bezug auf ein Schmiermittel, für dessen Aufnahme es angeordnet ist, aufweist und dass das Werkzeug (1) mindestens einen Ölgeber (9) für jede Schmiermittelkategorie umfasst, wobei jeder Ölgeber (9) die gleiche Farbgebung oder die gleiche optische Codierung wie das bestimmte Reservoir (2), das demselben Schmiermittel zugeordnet ist, aufweist.

17. Werkzeug (1) nach Anspruch 16, **dadurch gekennzeichnet, dass** jeder Ölgeber (9) für jede Schmiermittelkategorie eine bestimmte Form und eine bestimmte Oberfläche besitzt.

18. Werkzeug (1) nach Anspruch 1, **dadurch gekennzeichnet, dass** es mindestens einen Ölgeber (9) umfasst, der einteilig mit mindestens einem Deckel (3) ausgebildet ist.

19. Werkzeug (1) nach Anspruch 1, **dadurch gekennzeichnet, dass** es mindestens einen Ölgeber (9) umfasst, ausgelegt, eingerastet zu werden an einem Ende gegenüber jenem, das für die Übertragung von Schmiermittel bestimmt ist, in einem Aufnahmeraum (183), den ein Halter (18) des Werkzeugs (1) aufweist.

20. Werkzeug (1) nach Anspruch 1, **dadurch gekennzeichnet, dass** es mindestens eine klappbare Lupe (14) umfasst, die mindestens zwei Linsen (15, 16) aufweist, bewegbar durch Ausklappen oder Einklappen durch translatorische und/oder rotatorische Bewegung eines die Linsen (15, 16) tragenden Körpers (17), den die Lupe (14) aufweist.

21. Werkzeug (1) nach Anspruch 20, **dadurch gekennzeichnet, dass** es mindestens eine Klinge (19) umfasst, deren ausgeklapptes Ende als Lupe nach Anspruch 21 dient.

## Claims

1. Watchmaker's portable lubrication tool (1) comprising a plurality of chambers (20) comprised in at least one horological lubricant reservoir (2), each only accessible to a user in a first open position of said tool (1), each said reservoir (2) being closable by at least one sealed lid (3) which, in a second closed position, is kept sealingly pressed on said reservoir (2), said tool comprising a carrier structure (10) for at least one said reservoir (2) and for a said lid (3) associated with said reservoir (2), and said structure (10) being a component of a multi-function pocket knife of the "Swiss army knife" type, which comprises a frame (18) on which pivots a plurality of blades (19), said tool (1) comprising at least one elastic return means (4) arranged to exert, in said second closed position, a force on said at least one lid (3) to press said lid sealingly on said at least one reservoir (2).

2. Tool (1) according to claim 1, **characterized in that** at least one said lid (3) is made of elastic material or of elastomer or of rubber or of cork.

3. Tool (1) according to claim 1, **characterized in that** the tool comprises at least one pivoting element (5) or one sliding element (50) which is arranged, in said second closed position, to form a stop surface (6) for said at least one lid (3) to limit the travel thereof or to compress said lid onto said at least one reservoir (2).

4. Tool (1) according to claim 3, **characterized in that** at least one said pivoting element (5) is formed by a said blade (19).

5. Tool (1) according to claim 1, **characterized in that** at least one said lid (3) is formed by a said blade (19).

6. Tool (1) according to claim 1, **characterized in that** at least one said lid (3) cooperates with a said reservoir (2) via translational guiding means or via a dovetail guiding arrangement.

7. Tool (1) according to claim 1, **characterized in that** the tool comprises a separate first housing (7) for each said reservoir (2).

8. Tool (1) according to claim 1, **characterized in that** at least one said reservoir (2) is removable to be cleaned or filled.

9. Tool (1) according to claim 8, **characterized in that** the tool comprises first snap-fit means (11) for said at least one reservoir (2) which are provided in said at least one reservoir (2) and/or in said structure (10) that carries said at least one said first housing (7), to hold said reservoir (2) in its said first housing (7).

10. Tool (1) according to claim 7, **characterized in that** said structure (10) carries said at least one said first housing (7), and **in that** at least one said reservoir (2) cooperates with said structure (10) via translational guiding means or via a dovetail guiding arrangement.

11. Tool (1) according to claim 10, **characterized in that** at least one said blade (19) comprises part of said translational guiding means or of said dovetail guiding arrangement of said at least one said reservoir (2).

12. Tool (1) according to claim 1, **characterized in that** the tool comprises at least a second housing (8) for at least one said lid (3).

13. Tool (1) according to claim 12, **characterized in that** the tool comprises second snap-fit means (12) for said at least one lid (3) which are provided in said at least one lid (3) and/or in said structure (10) that carries said at least one said second housing (8), to keep said lid (3) sealingly in position in its said second housing (8), in a closed position of said lid (3).

14. Tool (1) according to claim 12, **characterized in that** the tool comprises screw means (13) for said at least one lid (3) which are provided in said at least one lid (3) and in said structure (10) comprised in said tool (1) and that carries said at least one said second housing (8), to hold said lid (3) in its said second housing (8), in a closed position of said lid (3).

15. Tool (1) according to claim 1, **characterized in that** each said reservoir (2) comprises a colour or an optical code relating to a lubricant that said reservoir is arranged to contain, and **in that** each said lid (3) arranged to cooperate with a said specific reservoir (2) comprises the same colour or the same optical code as said specific reservoir (2).

16. Tool (1) according to claim 15, **characterized in that** each said reservoir (2) comprises a colour or an optical code relating to a lubricant that said reservoir is arranged to contain, and **in that** said tool (1) comprises at least one oil-pike (9) for each category of lubricant, each said oil-pike (9) comprising the same colour or the same optical code as said specific reservoir (2) associated with the same lubricant.

17. Tool (1) according to claim 16, **characterized in that** each said oil-pike (9) has a specific form and surface for each said category of lubricant.

18. Tool (1) according to claim 1, **characterized in that** the tool comprises at least one oil-pike (9) in one-piece with at least one said lid (3).

19. Tool (1) according to claim 1, **characterized in that** the tool comprises at least one oil-pike (9) arranged to be snap-fitted, via an end opposite to that intended for the transfer of lubricant, into a housing (183) comprised in a frame (18) of said tool (1).

20. Tool (1) according to claim 1, **characterized in that** the tool comprises at least one folding magnifying glass (14) comprising at least two lenses (15, 16) able to be extended or folded away by translation and/or rotation of a body (17) comprised in said magnifying glass (14) that carries said lenses (15, 16).

21. Tool (1) according to claim 20, **characterized in that** the tool comprises at least one said blade (19) whose extended end serves as a magnifying glass according to claim 21.
